# EUROPÄISCHE PATENTSCHRIFT

(11) **EP 3 025 624 B1**
(45) Veröffentlichungstag und Bekanntmachung des Hinweises auf die Patenterteilung: **26.09.2018**
(21) Anmeldenummer: 15192270.5
(22) Anmeldetag: 30.10.2015
(51) Int. Cl.: A47J 31/44, A47J 31/46, A47J 31/60

(54) **KAFFEEAUTOMAT**
COFFEE MACHINE
MACHINE À CAFÉ

(30) Priorität: 26.11.2014 DE 102014224085
(43) Veröffentlichungstag der Anmeldung: 01.06.2016
(73) Patentinhaber: BSH Hausgeräte GmbH, 81739 München (DE)
(72) Erfinder: Strobl, Robert, 83246 Unterwössen (DE); Nöth, Christoph, 90403 Nürnberg (DE); Jäger, Harald, 83349 Palling (DE); Grieb, Jöran, 83253 Rimsting (DE); Geldhauser, Monika, 96172 Mühlhausen (DE)

(56) Entgegenhaltungen:
- EP-A1- 2 875 761
- WO-A1-2009/027054
- DE-U1-202008 008 257

## Beschreibung

Die vorliegende Erfindung betrifft einen Kaffeeautomaten mit einem Gehäuse und einem daran höhenverstellbar gelagerten Ausgabeschlitten gemäß dem Oberbegriff des Anspruchs 1.

Aus der WO 2009/027054 A1 ist ein gattungsgemäßer Kaffeeautomat in der Art eines Getränkebereiters mit einem an einem Gehäuse höhenverstellbar gelagerten Ausgabeschlitten bekannt, der über eine Zulaufleitung mit einem Vorratsbehälter fluidleitend verbunden ist. Am Ausgabeschlitten befestigt sind dabei ein Kaffeeauslauf sowie ein Milchschäumer, die beide gemeinsam zu Reinigungszwecken entnommen werden können. Eine Zulaufleitung für Milch in den Milch-/Kaffeeauslauf ist hingegen nicht entnehmbar und kann deshalb nur im Gerät selbst mittels entsprechender Spülfunktionen gereinigt werden.

Aus der DE 20 2008 008 257 U1 ist ein Kaffeeautomat mit einem höhenverstellbar gelagerten Ausgabeschlitten und einer deutlich sichtbar an der Frontseite des Kaffeeautomaten angeordneten entnehmbaren Milchleitung bekannt.

Aus der nachveröffentlichten EP 2 875 761 A1 ist ein Kaffeeautomat mit einem Gehäuse und einem daran höhenverstellbar gelagerten Ausgabeschlitten bekannt, wobei der Ausgabeschlitten über eine Zulaufleitung mit einem Vorratsbehälter verbunden ist. Dazu ist die Zulaufleitung fluidleitend mit einem auf den Ausgabeschlitten aufsteckbaren Milchauslauf verbindbar.

Aus der EP 1 639 926 A1 ist ein Kaffeeautomat bekannt, der eine höhenverstellbare Auffangschale besitzt. Die Auffangschale ist dabei an einem Support befestigt. Über eine Verstellvorrichtung mit zumindest einer vertikal verlaufenden Zahnschiene kann ein am Support angeordneter Schieber mit einem Fortsatz formschlüssig zusammenwirken. Der Schieber ist in Richtung der Zahnschiene federbelastet und manuell entgegen der Federkraft verschiebbar. Hierdurch ist es möglich, durch eine Höhenverstellung der Auffangschale unterschiedlichste Getränkebehälter tropffrei befüllen zu können, was auch erforderlich ist, da eine Ausgabeeinrichtung, beispielsweise ein Kaffee-/Milchauslauf, starr mit einem Gehäuse des Kaffeeautomaten verbunden und damit nicht höhenverstellbar ist.

Nachteilig bei den aus dem Stand der Technik bekannten Kaffeeautomaten ist oftmals, dass zur Realisierung eines optisch ansprechenden Erscheinungsbildes Zulaufleitungen, wie beispielsweise ein Milchschlauch, nicht sichtbar verlegt sein sollen. Das nicht sichtbare Verlegen wiederum bedeutet jedoch auf der anderen Seite einen vergleichsweise hohen Montage- und Demontageaufwand, der für jede Reinigung der Zulaufleitung, insbesondere einer Milch führenden Leitung, getätigt werden muss.

Die vorliegende Erfindung beschäftigt sich daher mit dem Problem, für einen Kaffeeautomaten der gattungsgemäßen Art eine verbesserte oder zumindest eine alternative Ausführungsform anzugeben, die insbesondere die aus dem Stand der Technik bekannten Nachteile nicht mehr aufweist.

Dieses Problem wird erfindungsgemäß durch die Gegenstände des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem an sich bekannten Kaffeeautomaten mit einem Gehäuse und einem daran höhenverstellbar gelagerten Ausgabeschlitten sämtliche mit Milch in Kontakt tretende Komponenten zwischen dem Gehäuse und dem Ausgabeschlitten so auszubilden, dass diese vergleichsweise einfach vom Kaffeeautomaten abgenommen und dadurch auch vergleichsweise einfach gereinigt werden können. Hierzu weist eine Zulaufleitung eine erste Koppelstelle sowie eine zweite Koppelstelle auf, zwischen welchen ein die beiden Koppelstellen verbindender, flexibler Schlauch angeordnet ist. Die erste Koppelstelle ist lösbar fest am Gehäuse und zugleich fluidleitend mit einem Vorratsbehälter verbindbar. Die zweite Koppelstelle ist lösbar fest mit einem auf den Ausgabeschlitten aufsteckbaren Milch-/Kaffeeauslauf und zudem fluidleitend mit dem Ausgabeschlitten verbindbar. "Lösbar fest" bedeutet, dass die Verbindung der Lage nach fest definiert, aber manuell lösbar ist. Nach der Herstellung eines Kaffeemischgetränks, wie beispielsweise eines Cappuccinos, können somit der Vorratsbehälter, die Zulaufleitung mit ihren beiden Koppelstellen sowie der Milch-/Kaffeeauslauf zu Reinigungszwecken einfach vom Kaffeeautomaten abgenommen werden. Eine aufwändige Demontage der Zulaufleitung, wie bei bisherigen Kaffeeautomaten erforderlich, kann hierdurch entfallen. Auch ist bei den erfindungsgemäßen Kaffeeautomaten ein separates und damit vergleichsweise einfaches Reinigen sämtlicher mit Milch in Berührung kommender Komponenten des Kaffeeautomaten möglich, da diese einfach und mit geringem Aufwand abbaubar sind und dadurch beispielsweise in einer Spülmaschine wie herkömmliches Geschirr gereinigt werden können.

Erfindungsgemäß ist die Zulaufleitung von außen nicht sichtbar hinter dem Milch/Kaffeauslauf auf dessen Rückseite angeordnet. Die Anordnung auf der Rückseite des Milch-/Kaffeeauslaufs kann auch eine Konstruktion umfassen, bei der die Zuleitung von einer Rückseite des Milch-/Kaffeeauslaufs aus in ihm bzw. in seinem Gehäuse (de-) montierbar ist. Hierdurch ist es möglich, einen optisch äußerst ansprechenden Gesamteindruck zu erzeugen, da die Zulaufleitung für die Milch zum Milch-/Kaffeeauslauf für einen Benutzer des Kaffeeautomaten nicht sichtbar ist. Durch den abnehmbaren und insbesondere aufsteckbaren Milch-/Kaffeeauslauf ist es möglich, die Zulaufleitung mit ihren beiden Koppelstellen einfach am Ausgabeschlitten am Gehäuse bzw. am Milch-/Kaffeeauslauf zu montieren bzw. von diesem wieder abzunehmen, ohne dass hierfür eine aufwendige Demontage erfolgen muss. Durch das einfache Aufstecken des Milch-/Kaffeeauslaufs und damit auch durch ein einfaches Abziehen desselben werden die dahinterliegenden Bereiche bzw. seine Rückseite leicht zugänglich, wodurch insbesondere ein bisher unter Umständen erforderliches blindes Montieren bzw. "Durchfädeln" vermieden werden kann. Die Anordnung der Zulaufleitung auf der Rückseite des Milch-/Kaffeeauslaufs erleichtert die (De-)Montage der Zulaufleitung zusätzlich, da der Benutzer sie getrennt oder gar entfernt vom Kaffeevollautomaten beispielsweise bei ihm geeigneter erscheinenden Lichtverhältnissen manipulieren kann. Die Blende kann dabei auf den Milch-/Kaffeeauslauf bzw. auf den Ausgabeschlitten aufgesteckt oder aber mittels eines Scharniers am Ausgabeschlitten gelagert sein. Rein theoretisch ist selbstverständlich auch eine einstückige bzw. einteilige Ausbildung der Blende mit dem Milch-/Kaffeeauslauf denkbar.

Zweckmäßig ist die erste Koppelstelle über eine Führung am Gehäuse des Kaffeeautomaten fixierbar, wobei die Führung beispielsweise in der Art einer Öffnung ausgebildet sein kann. Eine derartige Führung erleichtert eine Montage bzw. Demontage der ersten Koppelstelle am Gehäuse erheblich, da sowohl die Montage als auch die Demontage durch eine einfache Schiebe- oder Steckbewegung realisiert werden können. In gleicher oder ähnlicher Weise kann selbstverständlich auch die zweite Koppelstelle am Ausgabeschlitten bzw. am Milch-/Kaffeeauslauf fixiert werden, wobei an diesem zusätzlich eine Aufnahmeöffnung bzw. ein Aufnahmeschacht zur Aufnahme der zweiten Koppelstelle vorgesehen sein kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine Ausgestaltungsform eines Kaffeeautomaten mit angeschlossenem Vorratsbehälter und geschlossener, einen Milch-/Kaffeeauslauf überdeckenden Blende,
- Fig. 2: eine Darstellung wie in Fig. 1, jedoch bei entnommenem Vorratsbehälter,
- Fig. 3: eine Darstellung wie in Fig. 2, jedoch bei geöffneter Blende,
- Fig. 4: eine Darstellung wie in Fig. 3, jedoch bei entnommenem Milch-/Kaffeeauslauf,
- Fig. 5: eine Detaildarstellung des Ausgabeschlittens,

- Fig. 6: eine Darstellung wie in Fig. 4, jedoch mit entnommener Zulaufleitung,
- Fig. 7: eine Ausgestaltungsform eines erfindungsgemäßen Kaffeeautomaten mit angeschlossenem Vorratsbehälter und einer einen Milch-/Kaffeeauslauf überdeckenden Blende,
- Fig. 8: einen Milch-/Kaffeeauslauf von seiner Rückseite aus,
- Fig. 9: eine Darstellung wie in Fig. 7, jedoch bei abgenommenem Milch-/Kaffeeauslauf,
- Fig. 10: Detaildarstellungen des Vorratsbehälters und der Zulaufleitung als milchführende Bauteile.

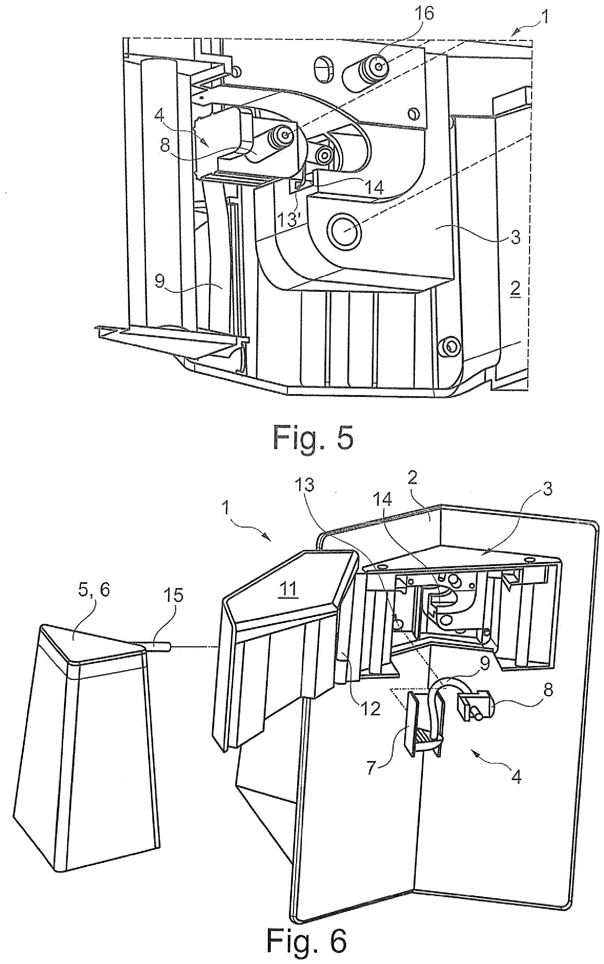

Entsprechend der Fig. 6, weist ein Kaffeeautomat 1 ein Gehäuse 2 mit einem daran höhenverstellbar gelagerten Ausgabeschlitten 3 auf, der über eine Zulaufleitung 4 mit einem Vorratsbehälter 5, insbesondere mit einem Milchbehälter 6, verbunden ist. Erfindungsgemäß weist nun die Zulaufleitung 4 eine erste Koppelstelle 7 sowie eine zweite Koppelstelle 8 auf, zwischen welchen ein die beiden Koppelstellen 7, 8 verbindender, flexibler Schlauch 9 angeordnet ist.

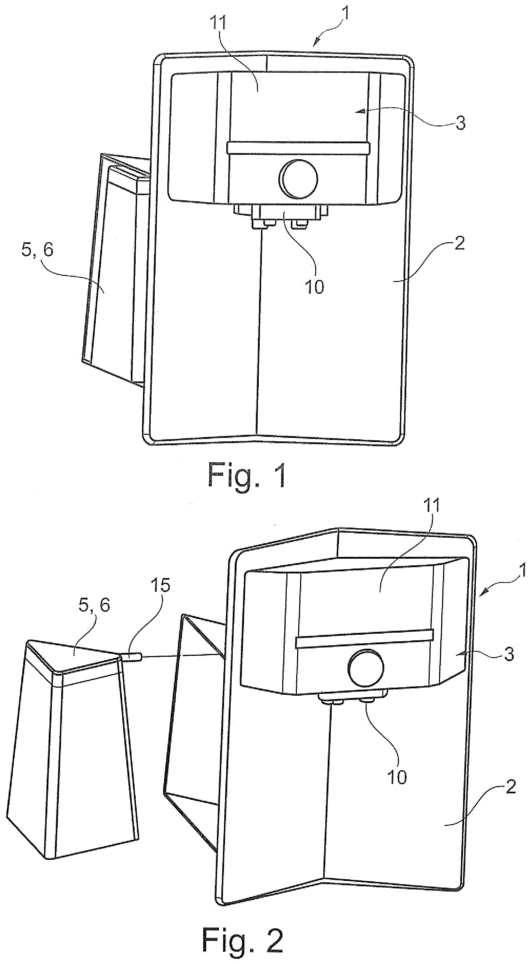

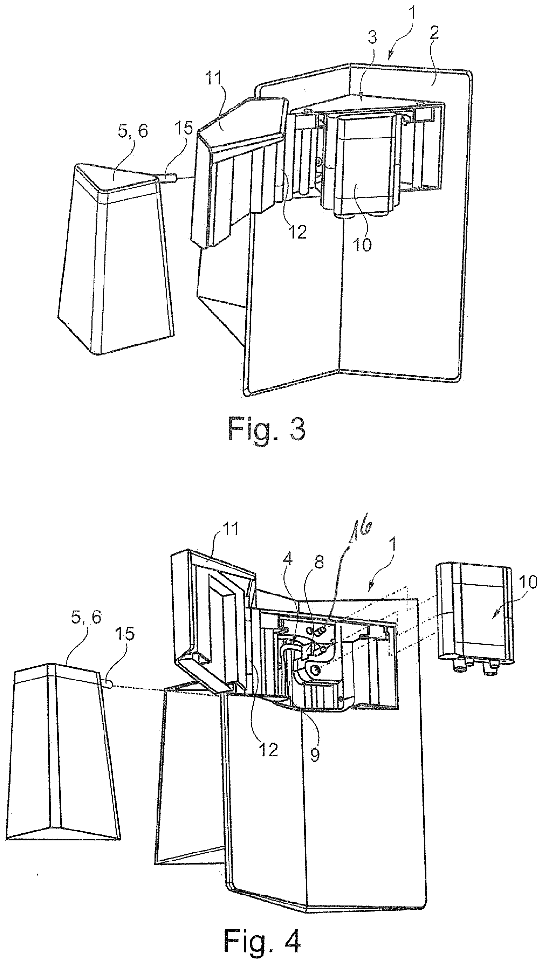

Betrachtet man die Fig. 1 bis 4 und 6, so kann man zudem eine Blende 11 erkennen, die den Milch-/Kaffeeauslauf 10 in geschlossenem Zustand abdeckt, wobei diese Blende11 beispielsweise mittels eines Scharniers 12 gelenkig am Ausgabeschlitten 3 angebunden sein kann.

Um eine Montage und Demontage der Zulaufleitung 4 weiter zu erleichtern, ist die erste Koppelstelle 7 über eine Führung 13 am Gehäuse 2 des Kaffeeautomaten 1 fixierbar. Die Führung 13 kann dabei beispielsweise eine entsprechende Öffnung im Gehäuse 2 sein. Die zweite Koppelstelle 8 ist ebenfalls über eine Führung 13' am Ausgabeschlitten 3 fixierbar, wobei in diesem Fall die Führung 13' in der Art einer Aufnahmeöffnung 14 am Ausgabeschlitten 3 ausgebildet ist.

Mittels des erfindungsgemäßen Kaffeeautomaten 1 lässt sich eine Reinigung desselben, insbesondere eine Reinigung der Zulaufleitung 4, besonders einfach bewerkstelligen, was im Folgenden genauer beschrieben wird. Zudem ist die gesamte Zulaufleitung 4 im Ausgabeschlitten 3 hinter dem Milch-/Kaffeeauslauf 10, so dass die gesamte Zulaufleitung 4 bei der Benutzung des Kaffeeautomaten 1 für einen Benutzer nicht sichtbar ist.

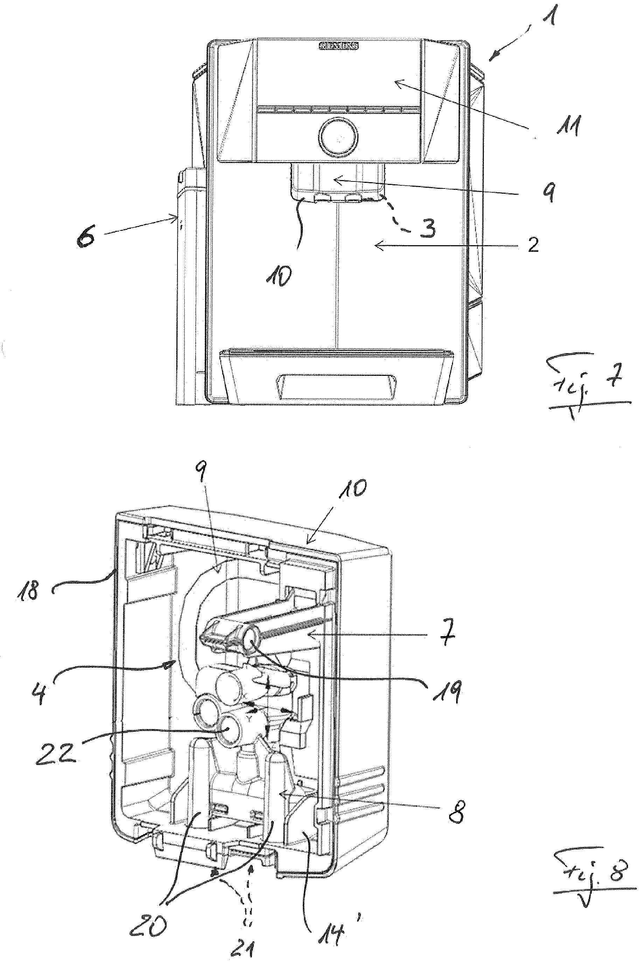

Figur 7 bis 10 zeigen weitere Darstellungen einer Ausgestaltungsform der Erfindung. Die mit Figur 1 prinzipiell vergleichbare Frontseite der Ausgestaltungsform gemäß Figur 7 wendet einem Benutzer ebenfalls eine in einem oberen Bereich des Kaffeevollautomaten 1 bzw. seines Gehäuses 2 angeordnete Blende 11 zu, unter der ein höhenverstellbarer Milch-/Kaffeeauslauf 10 hervorragt. Auf der linken Seite des Gehäuses 2 ist ein Teil eines Milchbehälters 6 als Vorratsbehälter erkennbar, der seitlich in das Gehäuse 2 eingeschoben wird.

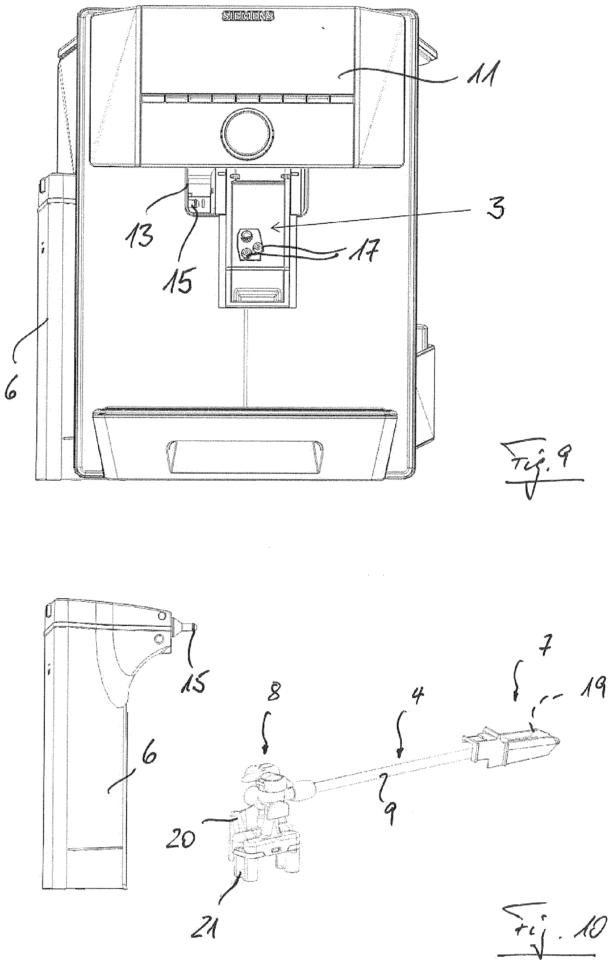

Während Figur 7 den Milch-/Kaffeeauslauf 10 in einer oberen Betriebsposition darstellt, ist er in Figur 9 vom Gehäuse 2 abgenommen. Darunter kommt ein höhenverstellbarer Ausgabeschlitten 3 am Gehäuse 2 zum Vorschein, auf den der Milch-/Kaffeeauslauf 10 aufsteckbar ist. Links neben dem Ausgabeschlitten 3 und unmittelbar unterhalb der Blende 11 befindet sich eine Aussparung 13, die genauso wie der Ausgabeschlitten 3 vom Milch-/Kaffeeauslauf 10 in dessen montierten Zustand abgedeckt ist. In der Aussparung 13 ist gerade noch ein vorderer Abschnitt des Anschlusses 15 des Milchbehälters 6 zu erkennen. Bei abgenommenem Milch-/Kaffeeauslauf 10 werden im Ausgabeschlitten 3 zudem Kaffeezuleitungen 17 sichtbar, die den Milch-/Kaffeeauslauf 10 mit Kaffee, Heißwasser und/oder Heißdampf versorgen.

Figur 8 zeigt einen Milch-/Kaffeeauslauf 10 von seiner Rückseite aus. In seinem quaderförmigen Gehäuse 18 ist die Zulaufleitung 4 montiert. Sie setzt sich aus dem ersten Ende 7, dem flexiblem Schlauch 9 und dem zweiten Ende 8 zusammen (vgl. auch Figur 10). Das erste Ende 7 als erste Koppelstelle der Zulaufleitung 4 ragt dornförmig aus dem Gehäuse 18 des Milch-/Kaffeeauslaufs 10 heraus und steht damit vom abgenommenen Milch-/Kaffeeauslauf 10 rückseitig ab. An seinem dem Schlauch 9 abgewandten Ende weist das erste Ende 7 einen waagrecht orientierten rohrförmigen Milchanschluss 19 auf, an den der Milchbehälter 6 ankoppeln kann. Das erste Ende 7 ist im Gehäuse 18 zum einen lösbar gehalten, so dass es als Bestandteil der Zulaufleitung entnommen werden kann. Zum anderen ist es auch innerhalb des Gehäuses 18 vertikal verfahrbar angebracht. Dazu ist es mit einem Magneten auf einer in Figur 7 verdeckten metallischen Fläche im Gehäuse 18 fixiert.

An das erste Ende 7 schließt sich der flexible, S-förmig gebogene Schlauch 9 an, der von einer oberen Position des ersten Endes 7 hinab zum zweiten Ende 8 reicht. Das zweite Ende 8 als zweite Kopplungsstelle der Zulaufleitung 4 steckt in einem Aufnahmeschacht 14', der an der Unterseite des Gehäuses 18 nicht erkennbare Durchbrüche aufweist. Das zweite Ende 8 umfasst zwei vertikal stehende Überlaufdome 20, die mit dem Schlauch 9 und dem ersten Ende 7 fluidisch verbunden sind. Außerdem umfasst das zweite Ende 8 zwei in Figur 8 nicht erkennbare Kaffeeausläufe 21 (vgl. Figur 10), die in fluidischer Verbindung mit einem Kaffeeanschluss 22 stehen. Er kommuniziert im montierten Zustand des Milch-/Kaffeeauslaufs 10 mit den Kaffeezuleitungen 17 gemäß Figur 9.

Figur 10 schließlich stellt alle milchführenden und daher entnehmbaren Bauteile des Kaffeevollautomaten 1 dar: dies sind einerseits der Milchbehälter 6 mit seinem Anschluss 15 und andererseits die Zulaufleitung 4 bestehend aus dem ersten Ende 7, dem flexiblen Schlauch 9 und dem zweiten Ende 8.

Zur Demontage des Milch-/Kaffeeauslaufs 10, beispielsweise zu Reinigungszwecken der milchführenden Bauteile, wird zunächst der Milchbehälter 6 seitlich aus dem Gehäuse 2 entnommen. Dabei löst sich die Steckverbindung zwischen dem Milchbehälter 6 bzw. seinem Anschluss 15 und dem Milchanschluss 19 des ersten Endes 7. Anschließend wird der Milch-/Kaffeeauslauf 10 in seine tiefste Stellung abwärts verfahren, so dass er vollständig unterhalb der Blende 11 positioniert ist. Dabei erhält der Ausgabeschlitten 3 die in Figur 9 dargestellte Position. Jetzt kann der Milch-/Kaffeeauslauf 10 vom Ausgabeschlitten 3 auf den Benutzer hin abgezogen werden, woran ihn die feststehende Blende 11 nicht hindert. Dabei wird die fluidische Verbindung zwischen den Kaffeeanschlüssen 22 und den Kaffeezuleitungen 17 gelöst.

Mit einer 180°-Drehung des Milch-/Kaffeeauslaufs 10 erhält der Benutzer etwa die Ansicht gemäß Figur 8. Damit liegt die zu reinigende Zulaufleitung 4 bequem in seinem Blickfeld, die er zudem unabhängig vom Standort des Kaffeevollautomaten 1 in eine gegebenenfalls besser beleuchtete Region bewegen kann. Als nächstes wird das erste Ende 7 aus seiner Position innerhalb des Gehäuses 18 entgegen der Magnetkraft gelöst. Damit lässt sich auch der flexible Schlauch weitgehend aus dem Gehäuse 18 entnehmen. Als letztes wird das zweite Ende 8 aus dem Aufnahmeschacht 14 entnommen, indem es in einer vertikalen Aufwärtsrichtung aus dem Ausnahmeschacht 14' entnommen wird. Damit sind die beiden entnehmbaren und milchführenden Bauteile, der Milchbehälter 6 und die Zulaufleitung 4, demontiert und können separat und bequem gereinigt werden.

Durch eine geeignete Dimensionierung des Milchbehälters 6, des ersten Endes bzw. der ersten Kopplungsstelle 7 und des Gehäuses 18 des Milch-/Kaffeeauslaufs 10 sowie der Blende 11 gelingt es, die Zulaufleitung 4 und ihre Kopplungsstellen für ihr erstes und zweites Ende 7, 8 für den Benutzer verdeckt bzw. nicht sichtbar zu gestalten. Dazu fällt die vertikale Position des ersten Endes 7 mit der Höhe des Anschlusses 15 des Milchbehälters 6 und die unterste Position des Ausgabeschlittens 3 zusammen. Die horizontale Position des ersten Endes 7 lässt sich durch die Breite des Auslaufschlittens 3 bestimmen, neben dem es in die Öffnung 13 ragen muss. Denn sowohl der Ausgabeschlitten 3 als auch die Öffnung 13 werden vom Gehäuse 18 des Milch-/Kaffeeauslaufs 10 verdeckt. Je weiter entfernt von einer vertikalen Symmetrieachse der Ansichtsfront die Aussparung 13 liegt, umso breiter wird das Gehäuse 18 ausfallen. Je näher es der Symmetrieachse rückt, umso weiter muss der Milchbehälter 6 in das Gehäuse 2 hineinragen, womit er stärker durch den Kaffeevollautomaten 1 erwärmt werden könnte. Eine bezüglich der kartesischen Koordinatenachsen schräge Anordnung des ersten Endes 7 zur Erfüllung der unterschiedlichen geometrischen Anforderungen würde eine ebenso schräge (De-) Montagerichtung des Milch-/Kaffeeauslaufs 10 erfordern. Sie kann jedoch für einen Benutzer schwerer nachvollziehbar sein, solange er die im Wesentlichen vertikale Gerätefront als Bezugsebene für seine Betätigungsrichtungen betrachtet.

### Bezugszeichenliste

- 1: Kaffeeautomat
- 2: Gehäuse
- 3: Ausgabeschlitten
- 4: Zulaufleitung
- 5: Vorratsbehälter
- 6: Milchbehälter
- 7: erste Koppelstelle
- 8: zweite Koppelstelle
- 9: Schlauch
- 10: Milch-/Kaffeeauslauf
- 11: Blende
- 12: Scharnier
- 13, 13': Führung
- 14, 14': Aufnahme
- 15: Anschluss
- 16: Wasserzulauf
- 17: Kaffeezuleitungen
- 18: Gehäuse
- 19: Milchanschluss
- 20: Überlaufdom
- 21: Kaffeeauslauf
- 22: Kaffeeanschluss

## Patentansprüche

1. Kaffeeautomat (1) mit einem Gehäuse (2) und einem daran höhenverstellbar gelagerten Ausgabeschlitten (3), der über eine Zulaufleitung (4) mit einem Vorratsbehälter (5), insbesondere mit einem Milchbehälter (6), verbunden ist, wobei die Zulaufleitung (4) eine erste Koppelstelle (7) und eine zweite Koppelstelle (8) aufweist sowie einen die erste und zweite Koppelstelle (7,8) verbindenden flexiblen Schlauch (9), wobei die erste Koppelstelle (7) lösbar fest am Gehäuse (2) und fluidleitend mit dem Vorratsbehälter (5) verbindbar ist, wobei der Vorratsbehälter (5), die Zulaufleitung (4) samt Koppelstellen (7,8) und der Milch-/Kaffeeauslauf (10) zu Reinigungszwecken vom Kaffeeautomaten (1) abnehmbar sind, und wobei die Zulaufleitung (4) von außen nicht sichtbar hinter dem Milch-/Kaffeeauslauf (10) auf dessen Rückseite angeordnet ist, **dadurch gekennzeichnet, dass** die zweite Koppelstelle (8) lösbar fest mit einem auf den Ausgabeschlitten (3) aufsteckbaren Milch-/Kaffeeauslauf (10) und fluidleitend mit dem Ausgabeschlitten (3) verbindbar ist..

2. Kaffeeautomat nach einem der Anspruch 1, **dadurch gekennzeichnet, dass** die erste Koppelstelle (7) über eine Führung (13) am Gehäuse (2) des Kaffeeautomaten (1) fixierbar ist.

3. Kaffeeautomat nach Anspruch 2, **dadurch gekennzeichnet, dass** die Führung (13) als Gehäuseöffnung ausgebildet ist.

4. Kaffeeautomat nach einem der Ansprüche 1 bis 3, **dadurch gekennzeichnet, dass** die zweite Koppelstelle (8) über eine Führung (13') an dem Ausgabeschlitten (3) oder am Milch-/Kaffeeauslauf (10) fixierbar ist.

5. Kaffeeautomat nach Anspruch 4, **dadurch gekennzeichnet, dass** die Führung (13') eine Aufnahmeöffnung (14) oder einen Aufnahmeschacht (14') aufweist, über welche die zweite Koppelstelle (8) in den Ausgabeschlitten (3) oder in den Milch-/Kaffeeauslauf (10) einschiebbar ist.

6. Kaffeeautomat nach einem der Ansprüche 1 bis 5, **dadurch gekennzeichnet, dass** der Milch-/Kaffeeauslauf (10) in auf den Ausgabeschlitten (3) aufgestecktem Zustand fluiddicht mit der zweiten Koppelstelle (8) verbunden ist.

7. Kaffeeautomat nach einem der Ansprüche 1 bis 6, **dadurch gekennzeichnet, dass** die Blende (11) schwenkbar am Ausgabeschlitten (3) angeordnet ist.

8. Kaffeeautomat nach einem der Ansprüche 1 bis 7, **dadurch gekennzeichnet, dass** die zweite Koppelstelle (8) einen Kaffeeanschluss (22) zur Koppelung mit Kaffeezuleitungen (17) am Gehäuse (2) des Kaffeevollautomaten (1) aufweist.

## Claims

1. Automatic coffee machine (1) with a housing (2) and an output carriage (3) mounted thereon in a height-adjustable manner, which output carriage (3) is connected to a storage container (5), in particular to a milk container (6), via an intake line (4), wherein the intake line (4) has a first coupling point (7) and a second coupling point (8) as well a flexible hose (9) connecting the first and second coupling point (7, 8), wherein the first coupling point (7) can be fixedly detachably connected to the housing and in a fluid-conducting manner to the storage container (5), wherein the storage container (5), the intake line (4) along with coupling points (7, 8) and the milk/coffee outlet (10) can be removed from the automatic coffee machine (1) for cleaning purposes, and wherein the intake line (4) is arranged behind the milk/coffee outlet (10) on the rear side thereof such that it cannot be seen from the outside, **characterised in that** the second coupling point (8) can be fixedly detachably connected to a milk/coffee outlet (10) which can be attached to the output carriage (3) and in a fluid-conducting manner to the output carriage (3).

2. Automatic coffee machine according to one of claim 1, **characterised in that** the first coupling point (7) can be fixed to the housing (2) of the automatic coffee machine (1) via a guide (13).

3. Automatic coffee machine according to claim 2, **characterised in that** the guide (13) is embodied as a housing opening.

4. Automatic coffee machine according to one of claims 1 to 3, **characterised in that** the second coupling point (8) can be fixed on the output carriage (3) or on the milk/coffee outlet (10) via a guide (13').

5. Automatic coffee machine according to claim 4, **characterised in that** the guide (13') has a receiving opening (14) or a receiving shaft (14'), via which the second coupling point (8) can be inserted into the output carriage (3) or into the milk/coffee outlet (10).

6. Automatic coffee machine according to one of claims 1 to 5, **characterised in that** the milk/coffee outlet (10) is connected to the second coupling point (8) in a fluid-tight manner in the state where it is attached to the output carriage (3).

7. Automatic coffee machine according to one of claims 1 to 6, **characterised in that** the panel (11) is arranged on the output carriage (3) in a pivotable manner.

8. Automatic coffee machine according to one of claims 1 to 7, **characterised in that** the second coupling point (8) has a coffee terminal (22) for coupling with coffee supply lines (17) on the housing of the fully automatic coffee machine (1).

## Revendications

1. Machine à café automatique (1) avec une carcasse (2) et un traîneau de distribution (3) y logé de façon réglable en hauteur, relié via un tuyau d'alimentation (4) à un réservoir (5), en particulier à un réservoir à lait (6), dans laquelle le tuyau d'alimentation (4) présente un premier point de couplage (7) et un deuxième point de couplage (8) ainsi qu'un flexible (9) reliant le premier et le deuxième point de couplage (7, 8), dans laquelle le premier point de couplage (7) peut être fixé de manière amovible à la carcasse (2) et conductrice de fluide au réservoir (5), dans laquelle le réservoir (5), le tuyau d'alimentation (4) avec points de couplage (7, 8) et la sortie de lait/café (10) sont amovibles de la machine à café automatique (1) à des fins de nettoyage, et dans laquelle le tuyau d'alimentation (4) est disposé de façon invisible de l'extérieur derrière la sortie de lait/café (10) sur son côté arrière, **caractérisée en ce que** le deuxième point de couplage (8) peut être fixé de manière amovible à une sortie de lait/café (10) emboîtable sur le traîneau de distribution (3) et conductrice de fluide au traîneau de distribution (3).

2. Machine à café automatique selon la revendication 1, **caractérisée en ce que** le premier point de couplage (7) peut être fixé à la carcasse (2) de la machine à café automatique (1) via un guide (13).

3. Machine à café automatique selon la revendication 2, **caractérisée en ce que** le guide (13) est exécuté sous la forme d'une ouverture de carcasse.

4. Machine à café automatique selon l'une des revendications 1 à 3, **caractérisée en ce que** le deuxième point de couplage (8) peut être fixé au traîneau de distribution (3) ou à la sortie de lait/café (10) via un guide (13').

5. Machine à café automatique selon la revendication 4, **caractérisée en ce que** le guide (13') présente un orifice d'accueil (14) ou un puits d'accueil (14') via lequel le deuxième point de couplage (8) est insérable dans le traîneau de distribution (3) ou dans la sortie de lait/café (10).

6. Machine à café automatique selon l'une des revendications 1 à 5, **caractérisée en ce que** la sortie de lait/café (10) est reliée de manière étanche aux fluides au deuxième point de couplage (8) à l'état emboîté sur le traîneau de distribution (3).

7. Machine à café automatique selon l'une des revendications 1 à 6, **caractérisée en ce que** le bandeau (11) est disposé de manière pivotante sur le traîneau de distribution (3).

8. Machine à café automatique selon l'une des revendications 1 à 7, **caractérisée en ce que** le deuxième point de couplage (8) présente un raccord à café (22) pour le couplage à des conduites d'alimentation en café (17) sur la carcasse (2) de la machine à café intégralement automatique (1).
